# EUROPÄISCHE PATENTANMELDUNG

(11) **EP 4 647 738 A1**
(43) Veröffentlichungstag der Anmeldung: **12.11.2025**
(21) Anmeldenummer: 25174327.4
(22) Anmeldetag: 05.05.2025
(51) Int. Cl.: G01M 13/045, G01M 13/028

(54) **EINRICHTUNG EINER WÄLZPRÜFUNG FÜR STIRNRÄDER**

(30) Priorität: 07.05.2024 DE 102024112839
(71) Anmelder: Klingelnberg AG, 8050 Zürich (CH)
(72) Erfinder: Gorgels, Christof, 50733 Köln (DE)
(74) Vertreter: Janke Scholl Patentanwälte PartG mbB

(57) **Zusammenfassung**

Verfahren, mit den Verfahrensschritten: Wälzprüfung von Stirnrädern (16) mittels eines Wälzprüfstands (28, 46), wobei Ergebnisse der Wälzprüfung statistisch auf Wiederholbarkeit und Reproduzier-barkeit überprüft werden und Bestimmen einer Standardabweichung für die Ergebnisse der Wälzprüfung; Hartfeinbearbeitung einer Mehrzahl von Stirnrädern (16), wobei eine jeweilige Verzahnung (17) eines jeweiligen Stirnrades (16) hartfeinbearbeitet wird; Wälzprüfung der Mehrzahl hartfeinbearbeiteter Stirnräder (16) mittels des Wälzprüfstands (28, 46), für den die Standardabweichung bestimmt worden ist; End-of-Line Prüfung der Mehrzahl hartfeinbearbeiteter Stirnräder (16) mittels eines Getriebeprüfstands (58); Auswertung der Ergebnisse der End-of-Line Prüfung der Mehrzahl hartfeinbearbeiteter Stirnräder (16), wobei die Stirnräder (16) anhand mindestens eines Qualitätskriteriums als Gutteile oder Schlechtteile deklariert werden; Auswertung der Ergebnisse der Wälzprüfung der Mehrzahl hartfeinbearbeiteter Stirnräder (16), wobei die Ergebnisse derjenigen Stirnräder (16) ausgewertet werden, die gemäß der End-of-Line Prüfung als Gutteile deklariert worden sind, wobei die Ergebnisse der Wälzprüfung jeweils eine Ordnungsanalyse umfassen, und wobei für eine oder mehrere Ordnungen jeweils eine Toleranzgrenze festgelegt wird.

## Beschreibung

Die vorliegende Erfindung betrifft ein Verfahren zur Wälzprüfung von Verzahnungen und insbesondere die Einrichtung einer Wälzprüfung zur Serienfertigung von Stirnverzahnungen bzw. Stirnrädern.

Die zunehmende Bedeutung des Geräuschverhaltens von Fahrzeuggetrieben führt dazu, dass auch Stirnräder vermehrt einer Wälzprüfung oder End-of-Line Prüfung unterzogen werden, die das dynamische Verhaltung und insbesondere das Geräuschverhalten eines betreffenden Stirnrads überprüfen. Ein entsprechender Fertigungsablauf und ein Qualitätsregelkreis sind z.B. aus dem Dokument WO2022207371A1 bekannt.

In der Fertigung von Stirnrädern ergibt sich die Problematik, dass Toleranzen für die Wälzprüfung vorab nicht bekannt sind. Die Einrichtung der Wälzprüfung für die Serienfertigung von Stirnrädern ist daher komplex oder kann in vielen Fällen nur von erfahrenen oder speziell geschulten Mitarbeitern durchgeführt werden.

Vor diesem Hintergrund liegt der vorliegenden Erfindung die technische Problemstellung zugrunde, ein Verfahren anzugeben, dass eine robuste und zuverlässige Wälzprüfung von Stirnrädern ermöglicht und insbesondere den Prüfaufwand insgesamt reduziert.

Die voranstehend beschriebene, technische Problemstellung wird mit den Merkmalen des unabhängigen Anspruchs gelöst. Weitere Ausgestaltungen der Erfindung ergeben sich aus den abhängigen Ansprüchen und der nachstehenden Beschreibung.

Die vorliegende Erfindung betrifft ein Verfahren, mit den Verfahrensschritten: Wälzprüfung von Stirnrädern mittels eines Wälzprüfstands, wobei Ergebnisse der Wälzprüfung statistisch auf Wiederholbarkeit und Reproduzierbarkeit überprüft werden und Bestimmen einer Standardabweichung für die Ergebnisse der Wälzprüfung; Hartfeinbearbeitung einer Mehrzahl von Stirnrädern, wobei eine jeweilige Verzahnung eines jeweiligen Stirnrades hartfeinbearbeitet wird; Wälzprüfung der Mehrzahl hartfeinbearbeiteter Stirnräder mittels des Wälzprüfstands, für den die Standardabweichung bestimmt worden ist; End-of-Line Prüfung der Mehrzahl hartfeinbearbeiteter Stirnräder mittels eines Getriebeprüfstands; Auswertung der Ergebnisse der End-of-Line Prüfung der Mehrzahl hartfeinbearbeiteter Stirnräder, wobei die Stirnräder anhand mindestens eines Qualitätskriteriums als Gutteile oder Schlechtteile deklariert werden; Auswertung der Ergebnisse der Wälzprüfung der Mehrzahl hartfeinbearbeiteter Stirnräder, wobei die Ergebnisse derjenigen Stirnräder ausgewertet werden, die gemäß der End-of-Line Prüfung als Gutteile deklariert worden sind, wobei die Ergebnisse der Wälzprüfung jeweils eine Ordnungsanalyse umfassen, und wobei für eine oder mehrere Ordnungen jeweils eine Toleranzgrenze festgelegt wird.

Erfindungsgemäß bildet demnach die End-of-Line Prüfung die Referenz, um Gutteile und Schlechtteile zu definieren, wobei eine oder mehrere ordnungsspezifische Toleranzgrenzen für die Wälzprüfung festgelegt werden, in dem die Ergebnisse der Wälzprüfung von denjenigen Stirnrädern herangezogen werden, die als Gutteile der End-of-Line Prüfung deklariert worden sind.

So können mithilfe der End-of-Line Prüfung eine oder mehrere ordnungsspezifische Toleranzgrenzen für die Wälzprüfung ermittelt werden, in dem Ergebnisse der End-of-Line Prüfung mit Ergebnissen der Wälzprüfung abgeglichen werden.

Die Toleranzen für die Wälzprüfung können daher durch den erfindungsgemäß vorgegebenen Prozessablauf ermittelt und eingestellt werden.

Auf diese Weise kann eine zuverlässige und robuste Wälzprüfung von Stirnrädern erfolgen.

Die Wälzprüfung kann bevorzugt eine Einflankenwälzprüfung sein. Die Wälzprüfung kann alternativ eine Zweiflankenwälzprüfung sein.

Der Wälzprüfstand zur Wälzprüfung und der Getriebeprüfstand zur End-of-Line-Prüfung sind zwei separate, voneinander verschiedene Vorrichtungen. Im Rahmen der Wälzprüfung wälzt ein zu prüfendes Stirnrad in bekannter Weise mit einem Meisterrad ab, um beispielsweise Drehfehler o. ä. Abweichungen zu bestimmen. Die End-of-Line Prüfung betrifft die akustische Prüfung des jeweiligen zu prüfenden Stirnrads im fertig montierten Zustand im Getriebegehäuse. D. h., die zu prüfende Verzahnung wird auf dem End-of-Line Prüfstand gemäß der realen Einbausituation mit der entsprechenden umgebenden Lagerungen und benachbarten Stirnrädern bzw. in der für den Einsatz vorgesehenen Radsatzpaarung getestet. Insbesondere kann mittels der End-of-Line Prüfung das fertig montierte, zur Auslieferung vorgesehen Getriebe auf dem Prüfstand getestet werden.

Ein jeweiliges Stirnrad kann ein außenverzahntes Stirnrad sein.

Ein jeweiliges Stirnrad kann eine Geradverzahnung aufweisen. Ein jeweiliges Stirnrad kann alternativ eine Schrägverzahnung aufweisen.

Die jeweilige Verzahnung eines jeweiligen Stirnrads kann Modifikationen aufweisen, wie Balligkeiten, Rücknahmen oder dergleichen.

Im erfindungsgemäßen Verfahren wird die Wälzprüfung zunächst auf Wiederholbarkeit und Reproduzierbarkeit überprüft. Diese Überprüfung kann auch als "Gage R&R" Prüfung bezeichnet werden, ein Fachterminus, der die Überprüfung der Fähigkeit eines betreffenden Messsystems für eine bestimmte Messaufgabe bezeichnet. Es wird vorliegend insbesondere getestet, ob die Kombination des Wälzprüfstands mit dem verwendeten Meisterrad und der für die zu prüfende Verzahnung vorgesehenen Aufspannung reproduzierbare, wiederholbare Ergebnisse liefert. So kann z.B. ein Defekt oder ein Verschleiß des Wälzprüfstands bzw. einer Komponente des Wälzprüfstands, des Meisterrads oder der Aufspannung dazu führen, dass die Ergebnisse der Wälzprüfung stark streuen bzw. Zufallsergebnisse sind. In diesem Fall muss der Prüfaufbau korrigiert werden, bis die Wiederholbarkeit und Reproduzierbarkeit gewährleistet sind.

Die zur Überprüfung der Wiederholbarkeit und Reproduzierbarkeit verwendeten Stirnräder wälzen während der Wälzprüfung mit dem gleichen oder mit demselben Meisterrad ab, das im weiteren Verlauf insbesondere auch für die Wälzprüfung der Serienfertigung verwendet wird. Demnach liegt den zur Überprüfung der Wiederholbarkeit und Reproduzierbarkeit verwendeten Stirnrädern dieselbe Sollgeometrie zugrunde, die auch den weiteren Stirnrädern zugrunde liegt.

Die Hartfeinbearbeitung der Stirnräder kann beispielsweise mittels eines Schleifverfahrens erfolgen. Dabei kann es sich um ein kontinuierlich teilendes Schleifverfahren handeln, wie zum Beispiel das Wälzschleifen mittels einer Schleifschnecke, oder es kann sich um ein einzelteilendes Schleifverfahren handeln, wie zum Beispiel das Profilschleifen oder das Wälzschleifen mittels einer Schleifscheibe.

Die jeweiligen Stirnräder sind vor der Hartfeinbearbeitung gehärtet worden.

Die Überprüfung der jeweiligen Stirnräder in der End-of-Line Prüfung ist eine Überprüfung des akustischen Verhaltens. Qualitätskriterien einer solchen End-of-Line Geräuschprüfung sind beispielsweise der Schalldruckpegel, der Luftschall, der Körperschall, der Lautstärkepegel, die Lautheit des Getriebegeräuschs aber auch zum Beispiel die Tonalität, d. h. in welchem Maße, dominante Frequenzen des Getriebegeräuschs hervortreten und als störende Einzeltöne hörbar sind. Eine bekannte Analyse des Geräuschverhaltens mittels der End-of-Line Prüfung ist das sogenannte NVH-Kriterium, wobei die Abkürzung NVH für "noise" (zu Deutsch: Geräusch), "vibration" (zu Deutsch: Vibration) und "Harshness" (zu Deutsch: "Rauigkeit"). So kann vorgesehen sein, dass die End-of-Line Prüfung für eine oder jedes der vorgenannten Merkmale zur Geräuschbewertung einen Grenzwert aufweist, der von einem betreffenden Stirnrad eingehalten werden muss, um als Gutteil deklariert zu werden.

Die Ordnungsanalyse stellt die Ergebnisse der Wälzprüfung als Ordnungsspektrum dar. Hierbei können einzelnen Ordnungen und/oder Ordnungsbereichen des Ordnungsspektrums Prüfmerkmale der Verzahnung zugeordnet sein, wie Rundlauffehler; Taumel; Teilungsfehler erster Ordnung und/oder höherer Ordnungen; Oberflächenwelligkeiten, Fehler der Flankenform oder dergleichen.

Die Ergebnisse der Wälzprüfung werden insbesondere erstellt, in dem umdrehungsbezogene Achsdaten des Wälzprüfstands mittels FFT als Ordnungsspektrum bereitgestellt werden. Die Abkürzung FFT steht dabei in bekannter Weise für die schnelle Fourier-Transformation (eng. fast fourier transformation). Die Ordnungen sind dabei Vielfache der Drehzahl des Stirnrads auf dem Wälzprüfstand, so dass gemessene Abweichungen bzw. Messwerte als Amplituden über den einzelnen Ordnungen aufgetragen werden.

Die End-of-Line Prüfung und die Anwendung des NVH-Kriterium sowie die Beurteilung weiterer akustischer Merkmale im Rahmen der End-of-Line Prüfung sind Stand der Technik und hinlänglich bekannt. Die gilt gleichermaßen für die Wälzprüfung und die damit verbundene Ordnungsanalyse. Die Erfindung ist vorliegend die Verwendung der End-of-Line Prüfung, um anhand von Gutteilen der End-of-Line Prüfung Toleranzen für die Wälzprüfung festzulegen und so die Einrichtung der Wälzprüfung zu vereinfachen.

Es kann daher vorgesehen sein, dass diejenigen Stirnräder, die in der End-of-Line Prüfung als Gutteile deklariert worden sind, als Referenz zum Festlegen von Toleranzen für mehrere Ordnungen herangezogen werden, die im Rahmen der Wälzprüfung für die Serienfertigung verwendet werden.

So kann z.B. analysiert werden, welche drei Stirnräder, die in der End-of-Line Prüfung als Gutteile deklariert worden sind, in der Wälzprüfung die maximalen Amplituden für die erste Ordnung der Wälzprüfung aufweisen. Ein Mittelwert dieser Amplituden kann als Toleranzgrenze für die erste Ordnung festgelegt werden, deren Einhaltung während der Wälzprüfung weiterer Stirnräder in der Serienfertigung überprüft wird. Alternativ kann der Maximalwert der Amplitude für eine betreffende Ordnung bestimmt und als Toleranzgrenze für diese Ordnung festgelegt werden - wobei wiederum lediglich die Gutteile der End-of-Line Prüfung ausgewertet werden, die als Referenz dienen.

Während es Einrichtens des Wälzprüfung können die Hartfeinbearbeitung, die Wälzprüfung und die End-of-Line Prüfung für verschiedene Stirnräder zumindest teilweise zeitgleich ablaufen. Die Reihenfolge der Wälzprüfung und der End-of-Line Prüfung ist während des Einrichtens der Wälzprüfung beliebig, wobei bevorzugt die Wälzprüfung eines betreffenden Stirnrads zeitlich vor der End-of-Line Prüfung erfolgt.

Während die zuvor erläuterten Schritte das Einrichten der Wälzprüfung und den Abgleich der Wälzprüfung mit der End-of-Line Prüfung beschreiben, wird die tatsächliche Serienfertigung nachfolgend als Hartfeinbearbeitung von "weiteren Stirnrädern" bezeichnet. Für diese weiteren Stirnräder bzw. die entsprechenden Fertigungslose wird daher die in dieser Art eingerichtete Wälzprüfung verwendet, um die Qualität der betreffenden weiteren Stirnräder im Rahmen der Wälzprüfung gegenüber den festgelegten Toleranzen zu prüfen.

Es kann daher, nach der Einrichtung der Wälzprüfung, eine Hartfeinbearbeitung von weiteren Stirnrädern und eine Wälzprüfung der weiteren Stirnräder erfolgen, wobei die Ergebnisse der Wälzprüfung eines jeweiligen weiteren Stirnrads jeweils eine Ordnungsanalyse umfassen, wobei für eine oder mehrere Ordnungen einer jeweiligen Ordnungsanalyse die Einhaltung der jeweiligen, festgelegten Toleranzgrenze überprüft wird.

Es kann vorgesehen sein, dass für ein jeweiliges der weiteren Stirnräder, für das eine festgelegte Toleranzgrenze nicht eingehalten wird, eine End-of-Line Prüfung durchgeführt wird. D. h. diejenigen Stirnräder, die während der Wälzprüfung eine festgelegte Toleranzgrenze nicht einhalten, d. h. gemäß der Wälzprüfung als Schlechtteile deklariert werden, können zum Abgleich der End-of-Line Prüfung zugeführt werden.

Die End-of-Line Prüfung ergibt für dieses Stirnrad entweder, dass das Ergebnis der Wälzprüfung korrekt ist, und das betreffende Stirnrad tatsächlich ein Schlechtteil ist, oder, dass die Wälzprüfung gegebenenfalls nicht korrekt ist, das betreffende Stirnrad gemäß der End-of-Line Prüfung als Gutteil zu deklarieren ist und die Toleranzgrenze der Wälzprüfung gegebenenfalls entsprechend angepasst werden kann. So kann ein Qualitätsregelkreis für die Wälzprüfung erzeugt werden, indem die Wälzprüfung regelmäßig mit der End-of-Line Prüfung abgeglichen wird, um eine möglichst gute Korrelation zwischen der End-of-Line Prüfung und der Wälzprüfung zu erreichen.

Es kann vorgesehen sein, dass diejenige Toleranzgrenze der Ordnung, die für das weitere Stirnrad gemäß der Ordnungsanalyse der Wälzprüfung nicht eingehalten worden ist, angepasst wird, sofern die End-of-Line Prüfung des weiteren Stirnrads ergibt, dass das weitere Stirnrad gemäß dem Qualitätskriterium der End-of-Line Prüfung als Gutteil zu deklarieren ist.

Durch das erfindungsgemäße Vorgehen kann insbesondere der Umfang der End-of-Line Prüfung reduziert werden. Soweit eine gute Korrelation zwischen der Wälzprüfung und der End-of-Line Prüfung erreicht ist, muss demnach nicht jedes Stirnrad der End-of-Line Prüfung zugeführt werden, da das Ergebnis der Wälzprüfung bereits eine ausreichend gute Vorhersage des Ergebnisses der End-of-Line Prüfung bildet. Insbesondere kann demnach vorgesehen sein, dass ein jeweiliges der weiteren Stirnräder, für das eine festgelegte Toleranzgrenze eingehalten wird, keiner End-of-Line Prüfung unterzogen wird.

Alternativ oder ergänzend kann vorgesehen sein, dass stichprobenartig, zufällig oder zu festgelegten Zeitabständen oder nach einer festgelegten Anzahl gefertigter Bauteile, einzelne Stirnräder, unabhängig vom Ergebnis der Wälzprüfung, der End-of-Line Prüfung zugeführt werden, um die Korrelation der Wälzprüfung mit der End-of-Line Prüfung zu überprüfen.

Es kann vorgesehen sein, dass für die weiteren Stirnrädern eine 100%-Prüfung bezüglich der Wälzprüfung erfolgt. Das bedeutet, dass alle weiteren Stirnräder der Wälzprüfung zugeführt werden. Aufgrund der Korrelation zwischen der Wälzprüfung und der End-of-Line Prüfung ist es jedoch nicht erforderlich, dass auch alle Stirnräder der End-of-Line Prüfung zugeführt werden. Vielmehr ist erfindungsgemäß vorgesehen, dass lediglich eine Teilmenge der weiteren Stirnräder der End-of-Line Prüfung zugeführt werden. Die Anzahl derjenigen weiteren Stirnräder, die der Wälzprüfung zugeführt werden, ist daher größer als die Anzahl derjenigen weiteren Stirnräder, die der End-of-Line Prüfung zugeführt werden. Auf diese Weise kann die Prüfzeit in erheblichem Maße reduziert werden.

Wie bereits zuvor diskutiert, kann auch nachdem die Wälzprüfung mithilfe der End-of-Line Prüfung eingerichtet worden ist, eine weitere Überwachung und Anpassung einer oder mehrerer Toleranzgrenzen erfolgen, um eine Korrelation der Wälzprüfung mit der End-of-Line Prüfung zu verbessern oder dauerhaft sicherzustellen.

Nachfolgend wird die Erfindung anhand einer Ausführungsbeispiele darstellenden Zeichnung näher beschrieben. Es zeigen jeweils schematisch:
Fig. 1 Verfahrensschritte eines erfindungsgemäßen Verfahrens;
Fig. 2 eine Verzahnmaschine;
Fig. 3 ein Wälzschleifen eines Stirnrads;
Fig. 4 eine Vorrichtung zur Einflankenwälzprüfung;
Fig. 5 eine Vorrichtung zur Zweiflankenwälzprüfung;
Fig. 6 eine End-of-Line Prüfung.

In einem Verfahrensschritt (A) erfolgt zunächst eine Wälzprüfung von Stirnrädern mittels eines Wälzprüfstands, wobei Ergebnisse der Wälzprüfung statistisch auf Wiederholbarkeit und Reproduzierbarkeit überprüft werden und Bestimmen einer Standardabweichung für die Ergebnisse der Wälzprüfung.

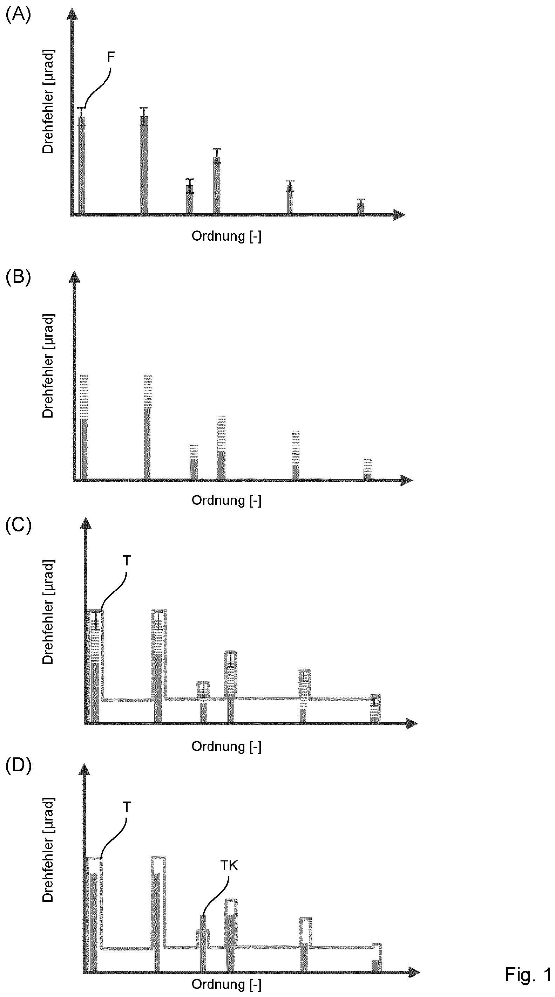

Das Ergebnis ist schematisch in Fig. 1 unter (A) dargestellt, wobei ein Ordnungsspektrum für den Drehfehler erstellt worden ist, und jeder Ordnung eine Standardabweichung in Form eines Fehlerbalkens F zugeordnet worden ist.

Anschließend erfolgt gemäß Schritt (B) eine Hartfeinbearbeitung einer Mehrzahl von Stirnrädern, wobei eine jeweilige Verzahnung eines jeweiligen Stirnrades hartfeinbearbeitet wird, und eine Wälzprüfung der Mehrzahl hartfeinbearbeiteter Stirnräder mittels des Wälzprüfstands erfolgt, für den die Standardabweichung bestimmt worden ist. Weiter erfolgen eine End-of-Line Prüfung der Mehrzahl hartfeinbearbeiteter Stirnräder mittels eines Getriebeprüfstands sowie eine Auswertung der Ergebnisse der End-of-Line Prüfung der Mehrzahl hartfeinbearbeiteter Stirnräder, wobei die Stirnräder anhand eines Qualitätskriteriums als Gutteile oder Schlechtteile deklariert werden. Hierbei kann es sich zum Beispiel um eine bekannte NVH-Auswertung bzw. um ein NVH-Kriterium der der End-of-Line Prüfung handeln.

Fig. 1 zeigt unter (B) die Ergebnisse der Wälzprüfung der Mehrzahl hartfeinbearbeiteter Stirnräder als Ordnungsanalyse derjenigen Stirnräder, die im Rahmen der End-of-Line Prüfung als Gutteile deklariert worden sind.

Die Maximalwerte jeder Ordnung aus (B) werden zusammen mit der Standardabweichung aus (A) zum Festlegen der Toleranzen T für die einzelnen Ordnungen der Wälzprüfung verwendet. Das Festlegen der Toleranzen ist in Fig. 1 gemäß Diagramm (C) gezeigt. Es wird daher für jede betrachtete Ordnung untersucht, welches der hartfeinbearbeiteten Stirnräder, das gemäß der End-of-Line Prüfung als Gutteil deklariert worden ist, für eine betreffende Ordnung die maximale Abweichung ausbildet, und diese Abweichung wird für die jeweilige Ordnung als obere Toleranzgrenze festgelegt.

Damit ist gemäß Schritt (C) das Einrichten der Wälzprüfung zunächst abgeschlossen und es kann eine Hartfeinbearbeitung weiterer Stirnräder erfolgen und es kann eine Wälzprüfung der weiteren Stirnräder erfolgen, wobei die Ergebnisse der Wälzprüfung eines jeweiligen weiteren Stirnrads jeweils eine Ordnungsanalyse umfassen und wobei für eine oder mehrere Ordnungen einer jeweiligen Ordnungsanalyse die Einhaltung der jeweiligen, gemäß Schritt (C) festgelegten Toleranzgrenze überprüft wird.

Für weitere Stirnräder, für die eine gemäß Schritt (C) festgelegte Toleranzgrenze nicht eingehalten wird, kann eine End-of-Line Prüfung durchgeführt werden. Ergibt die End-of-Line Prüfung im Widerspruch zur Wälzprüfung, dass das Stirnrad ein Gutteil ist, kann die entsprechende Toleranzgrenze der Wälzprüfung anhand dieses Stirnrads angepasst werden, in dem die Amplitude der betreffenden Ordnung als neue, korrigierte Toleranzgrenze TK für die nachfolgenden Wälzprüfungen verwendet wird. Dieses Vorgehen ist in Fig. 1 unter Schritt (D) veranschaulicht.

So ist in Schritt (D) zu erkennen, dass TK oberhalb der ursprünglich festgelegten Toleranzgrenze T liegt. Die Toleranzgrenze T wird daher für die betreffende Ordnung auf den Wert TK angehoben.

D.h. diejenige Toleranzgrenze der Ordnung, die für das weitere Stirnrad gemäß der Ordnungsanalyse der Wälzprüfung nicht eingehalten worden ist, wird angepasst, sofern die End-of-Line Prüfung des weiteren Stirnrads ergibt, dass das weitere Stirnrad gemäß dem Qualitätskriterium der End-of-Line Prüfung als Gutteil zu deklarieren ist.

Die End-of-Line Prüfung bildet daher weiterhin die Referenz, wobei die Toleranzen der Ordnungen der Wälzprüfung anhand der End-of-Line Prüfung angepasst werden, um eine möglichst gute Korrelation der Wälzprüfung mit der End-of-Line Prüfung zu erreichen

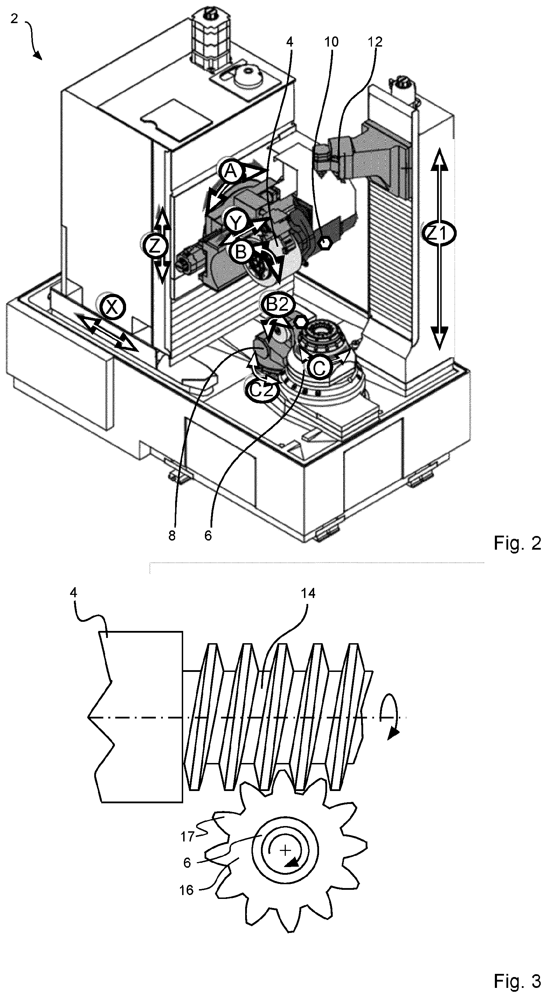

Fig. 2 zeigt eine Verzahnmaschine 2 zur Hartfeinbearbeitung von Stirnrädern, d.h. eine Verzahnungsschleifmaschine 2. Die Verzahnungsschleifmaschine 2 hat eine Werkzeugspindel 4 zum Halten und Drehantreiben eines Schleifwerkzeugs. Die Verzahnungsschleifmaschine 2 hat eine Werkstückspindel 6 zum Halten und Drehantreiben eines zu schleifenden verzahnten Stirnrads. Die Verzahnungsschleifmaschine 2 hat eine Abrichtvorrichtung 8 zum Abrichten von Schleifwerkzeugen.

Die Verzahnungsschleifmaschine 2 hat numerisch gesteuerte Maschinenachsen X, Y, Z, A, B, C, C2, B2 zum Ausführen von translatorischen und rotatorischen Relativbewegungen, um beim Verzahnen oder Abrichten die geforderte Bearbeitungskinematik bereitzustellen. Weiter hat die Verzahnungsschleifmaschine 2 eine Achse Z1 mit einer verschiebbaren Pinole 12 zum Spannen von Wellen oder Spanndornen.

Fig. 3 zeigt exemplarisch und schematisch die Werkzeugspindel 4 mit einer daran gehaltenen abrichtbaren Schleifschnecke 14 sowie die Werkstückspindel 6 mit einem daran gehaltenen zu schleifenden, verzahnten Stirnrad 16, dessen Verzahnung 17 geschliffen wird.

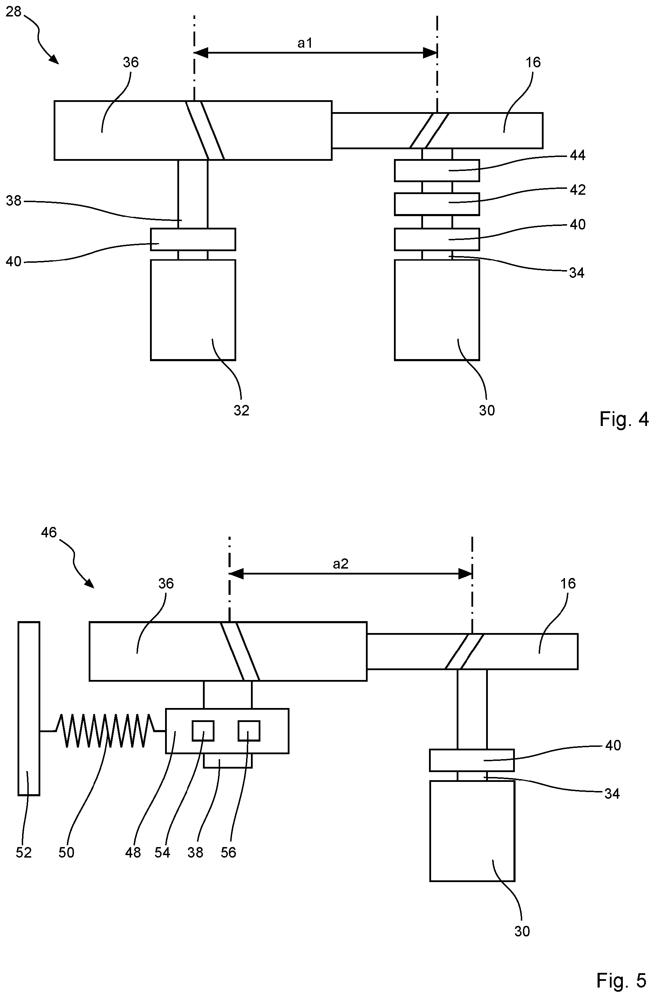

Fig. 4 zeigt exemplarisch den schematischen Aufbau eines Prüfstands 28 zur Durchführung einer Einflankenwälzprüfung für ein jeweiliges Stirnrad 16.

Der Prüfstand 28 hat einen ersten Antrieb 30 und einen zweiten Antrieb 32. Der erste Antrieb 30 ist zum Antreiben einer ersten Welle 34 eingerichtet, auf der das zu prüfende verzahnte Stirnrad 16 montiert ist.

Der zweite Antrieb 32 dient zum Abbremsen eines Gegenrads 36, das auf einer mit dem Antrieb 32 gekoppelten zweiten Welle 38 montiert ist.

Das Gegenrad 36 ist ein außenverzahntes Stirnrad, d.h. das Meisterrad, das mit der Verzahnung des Stirnrads 16 im Eingriff ist. Durch das Antreiben des Stirnrads 16 und das gleichzeitige Abbremsen des Gegenrads 36 lassen sich eine Drehzahl und ein Drehmoment während des Prüflaufs einstellen. Es versteht sich, dass auch Drehzahl- und Drehmomentverläufe einstellbar sind. Ein Achsabstand a1 zwischen den Wellen 38, 34 ist konstant.

Der Prüfstand 28 weist Drehgeber bzw. Winkelmesssysteme 40, einen Drehbeschleunigungsaufnehmer 42, sowie einen Körperschallsensor 44 auf.

Alternativ oder ergänzend kann eine Zweiflankenwälzprüfung durchgeführt werden. Ein Prüfstand 46 zur Zweiflankenwälzprüfung ist exemplarisch und schematisch in Fig. 5 gezeigt. Zur Vermeidung von Wiederholungen werden nachfolgend gleichen Merkmalen die gleichen Bezugszeichen zugeordnet.

Die Zweiflankenwälzprüfung unterscheidet sich im Wesentlichen dadurch von der zuvor mit Bezug zu Fig. 4 beschriebenen Einflankenwälzprüfung, dass ein Achsabstand a2 während der Prüfung nicht konstant ist. Das Gegenrad 36 ist mit seiner Welle 38 an einem verfahrbaren Schlitten 48 montiert und gelagert. Der verfahrbare Schlitten 48 ist mittels einer Federeinrichtung 50 an einem unbeweglichen Gegenhalter 52 abgestützt.

Mittels der Federeinrichtung 50 wird das Gegenrad 36 in den Zahnkontakt zur zu prüfenden Verzahnung des Stirnrads 16 gedrückt, wobei im Zahnkontakt eine beidseitige Kontaktierung sowohl der Rechts- als auch der Linksflanken der zu prüfenden Verzahnung des Stirnrads 16 vorliegt.

Während der Prüfung, d.h. während des Abwälzens des verzahnten Stirnrads 16 mit dem Gegenrad 36, wird das Gegenrad 36 mit einer definierten Kraft in Richtung des Stirnrads 16 gedrückt.

Die Abweichungen werden anhand einer translatorischen Verlagerung des verfahrbaren Schlittens 34 erfasst, wobei dem Schlitten 48 ein Wegaufnehmer 54 und ein Schwingungsaufnehmer 56 zugeordnet sind, um Messdaten aufzunehmen. Die Einflankenwälzprüfung und die Zweiflankenwälzprüfung sind Stand der Technik.

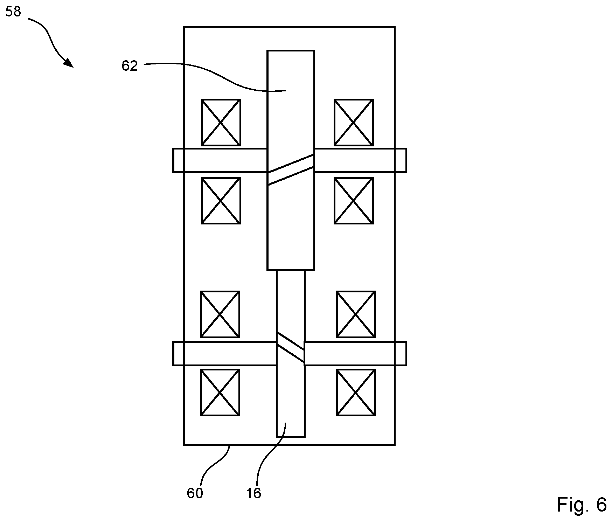

Fig. 6 zeigt einen End-of-Line Prüfstand 58, wobei das zu prüfende Stirnrad 16 in einem Getriebegehäuse 60 montiert und mit dem für die Auslieferung vorgesehenen Gegenrad 62 gepaart ist. Es erfolgt eine akustische Untersuchung, d.h. eine Analyse des Getriebegeräuschs bezüglich eines oder bezüglich mehrerer Qualitätskriterien. Die End-of-Line Prüfung ist Stand der Technik.

## Patentansprüche

1. Verfahren, mit den Verfahrensschritten:
- Wälzprüfung von Stirnrädern (16) mittels eines Wälzprüfstands (28, 46), wobei Ergebnisse der Wälzprüfung statistisch auf Wiederholbarkeit und Reproduzierbarkeit überprüft werden und Bestimmen einer Standardabweichung für die Ergebnisse der Wälzprüfung;
- Hartfeinbearbeitung einer Mehrzahl von Stirnrädern (16), wobei eine jeweilige Verzahnung (17) eines jeweiligen Stirnrades (16) hartfeinbearbeitet wird;
- Wälzprüfung der Mehrzahl hartfeinbearbeiteter Stirnräder (16) mittels des Wälzprüfstands (28, 46), für den die Standardabweichung bestimmt worden ist;
- End-of-Line Prüfung der Mehrzahl hartfeinbearbeiteter Stirnräder (16) mittels eines Getriebeprüfstands (58);
- Auswertung der Ergebnisse der End-of-Line Prüfung der Mehrzahl hartfeinbearbeiteter Stirnräder (16), wobei die Stirnräder (16) anhand mindestens eines Qualitätskriteriums als Gutteile oder Schlechtteile deklariert werden;
- Auswertung der Ergebnisse der Wälzprüfung der Mehrzahl hartfeinbearbeiteter Stirnräder (16), wobei die Ergebnisse derjenigen Stirnräder (16) ausgewertet werden, die gemäß der End-of-Line Prüfung als Gutteile deklariert worden sind, wobei die Ergebnisse der Wälzprüfung jeweils eine Ordnungsanalyse umfassen, und wobei für eine oder mehrere Ordnungen jeweils eine Toleranzgrenze festgelegt wird.

2. Verfahren nach Anspruch 1,
**dadurch gekennzeichnet, dass**
nach der Auswertung der Ergebnisse der Wälzprüfung der Mehrzahl hartfeinbearbeiteter Stirnräder (16) eine Hartfeinbearbeitung von weiteren Stirnrädern (16) und eine Wälzprüfung der weiteren Stirnräder (16) erfolgen, wobei die Ergebnisse der Wälzprüfung eines jeweiligen weiteren Stirnrads jeweils eine Ordnungsanalyse umfassen, wobei für eine oder mehrere Ordnungen einer jeweiligen Ordnungsanalyse die Einhaltung der jeweiligen, festgelegten Toleranzgrenze (T) überprüft wird.

3. Verfahren nach Anspruch 2,
**dadurch gekennzeichnet, dass**
für ein jeweiliges der weiteren Stirnräder (16), für das eine festgelegte Toleranzgrenze (T) nicht eingehalten wird, eine End-of-Line Prüfung durchgeführt wird.

4. Verfahren nach Anspruch 3,
**dadurch gekennzeichnet, dass**
diejenige Toleranzgrenze (T) der Ordnung, die für das weitere Stirnrad (16) gemäß der Ordnungsanalyse der Wälzprüfung nicht eingehalten worden ist, angepasst wird, sofern die End-of-Line Prüfung des weiteren Stirnrads (16) ergibt, dass das weitere Stirnrad (16) gemäß dem Qualitätskriterium als Gutteil zu deklarieren ist.

5. Verfahren nach einem der voranstehenden Ansprüche,
**dadurch gekennzeichnet, dass**
für ein jeweiliges der weiteren Stirnräder (16), für das eine festgelegte Toleranzgrenze eingehalten wird, keine End-of-Line Prüfung durchgeführt wird.

6. Verfahren nach einem der voranstehenden Ansprüche,
**dadurch gekennzeichnet, dass**
alle weiteren Stirnrädern (16) der Wälzprüfung zugeführt werden.

7. Verfahren nach einem der voranstehenden Ansprüche,
**dadurch gekennzeichnet, dass**
eine Überwachung und Anpassung einer oder mehrerer Toleranzgrenzen (T) erfolgt, um eine Korrelation der Wälzprüfung mit der End-of-Line Prüfung zu verbessern.

8. Verfahren nach einem der voranstehenden Ansprüche,
**dadurch gekennzeichnet, dass**
die Wälzprüfung eine Einflankenwälzprüfung und/oder eine Zweiflankenwälzprüfung ist.

9. Verfahren nach einem der voranstehenden Ansprüche,
**dadurch gekennzeichnet, dass**
ein jeweiliges zu prüfendes Stirnrad (16) für die End-of-Line Prüfung in einem Getriebegehäuse (60) montiert ist, wobei das Getriebegehäuse (60) den Einbau des Stirnrads (16) gemäß der Betriebsbedingungen im ausgelieferten Zustand eines fertigen Getriebes widerspiegelt oder wobei das Getriebegehäuse dasjenige Getriebegehäuse des auszuliefernden Getriebes ist.

10. Verfahren nach einem der voranstehenden Ansprüche,
**dadurch gekennzeichnet, dass**
im Rahmen der Auswertung der Ergebnisse der Wälzprüfung der Mehrzahl hartfeinbearbeiteter Stirnräder (16) eine maximale Abweichung einer Ordnung als Toleranzgrenze für diese Ordnung festgelegt wird.
